# EUROPÄISCHE PATENTSCHRIFT

(11) **EP 2 344 392 B1**
(45) Veröffentlichungstag und Bekanntmachung des Hinweises auf die Patenterteilung: **28.05.2014**
(21) Anmeldenummer: 09760711.3
(22) Anmeldetag: 07.10.2009
(51) Int. Cl.: B65C 9/40

(54) **TESTVERFAHREN FÜR INSPEKTIONSEINRICHTUNG, INSBESONDERE FÜR ETIKETTENSITZKONTROLLEINRICHTUNG**
TEST METHOD FOR INSPECTION DEVICE, PARTICULARLY FOR LABEL SEATING INSPECTION DEVICE
PROCÉDÉ DE TEST POUR DISPOSITIF DE CONTRÔLE, EN PARTICULIER POUR DISPOSITIF DE CONTRÔLE DE POSITION D ÉTIQUETTES

(30) Priorität: 07.10.2008 DE 102008050249
(43) Veröffentlichungstag der Anmeldung: 20.07.2011
(73) Patentinhaber: KHS GmbH, 44143 Dortmund (DE)
(72) Erfinder: MOTTER, Theo, 52223 Stolberg (DE); FISCHER, Frank, 55546 Pfaffen-Schwabenheim (DE)
(86) Internationale Anmeldenummer: PCT/EP2009/007190
(87) Internationale Veröffentlichungsnummer: WO 2010/040512

(56) Entgegenhaltungen:
- EP-A1- 1 627 816
- EP-A1- 1 628 241
- EP-A2- 0 287 018
- EP-A2- 1 593 971
- WO-A2-2006/011803
- DE-A1- 3 324 449
- US-A1- 2005 263 443
- US-A1- 2007 017 593

## Beschreibung

Die Erfindung betrifft ein Testverfahren zur Überprüfung einer Inspektionseinrichtung.

Die EP 1 627 816 A1 offenbart ein Verfahren zum Etikettieren von Flaschen oder dergleichen Konturbehälter mit wenigstens einem Etikett. Die Behälter sind auf Behälterträgern einer Transportstrecke angeordnet und werden an wenigstens einem Etikettieraggregat vorbeibewegt und dabei jeweils etlkettiert, wobei mittels wenigstens einer ersten Sensoreinheit an der Transportstrecke die Kontur des jeweiligen Behälters und/oder die für die Etikettierung kritischen Abmessungen dieser Kontur und/oder die Lage bereits auf den Behältern aufgebrachter Etiketten zur Bildung eines Ist-Wertes erfasst werden, und dass unter Berücksichtigung er Abweichung des Istwertes von einem Sollwert der Etikettiervorgang des jeweiligen Etiketts an den zu etikettierenden Behälter derart gesteuert wird, dass das jeweilige Etikett nach dem Aufbringen auf den Behälter dort die gewünschte Lage aufweist.

Die US 2007/017593 beschreibt ein Verfahren zum Überprüfen einer automatischen Behälterbehandlungsanlage auf korrekte und fehlerfreie Behandlung der zu verarbeitenden Behälter, wobei mit einer ersten Prüfmaßnahme die Anzahl der hintereinander zugeführten Behälter und mit einer zweiten Prüfmaßnahme die Anzahl der hintereinander auslaufenden Behälter registriert wird und bei Änderung der Anzahl der auslaufenden gegenüber der der zugeführten Behälter eine Störungsmeldung erfolgt und diese zur sofortigen oder späteren Aktion für den Betrieb der Behandlungsmaschine verwertet wird. Ein vergleichbare Vorrichtung ist aus der WO 2008/011803 A2 bekannt.

Die DE 10 2004 005 994 A1 offenbart eine Etikettiermaschine. Diese weist eine Vorrichtung zum Zuführen von Etiketten und ein Etikettieraggregat auf. Das Etikettieraggregat besitzt einen Etikettenbehälter, eine Leimwalze, einen mit beleimbaren Entnahmesegmenten versehenen rotierbaren Träger, sowie einen Greifzylinder. So können beispielsweise Flaschen mit Etiketten versehen werden, wobei die Etikettiermaschine z.B. als Rundläufer, Linearmaschinen oder auch Horizontalläufer ausgebildet sein kann, Im Auslaufbereich der etikettierten Flaschen ist eine Etikettensitzkontrolleinrichtung angeordnet, mit welcher die gewünschte Anordnung der Etiketten auf den Flaschen überwacht wird. Denkbar ist, die Etiketten auf einen korrekten Sitz beispielsweise zu an den Flaschen angeordneten Gestaltungsmerkmalen (so genannte Embossings) zu überprüfen. Möglich ist auch, Hals- und Brustetiketten auf korrekte Ausrichtung zueinander oder auch zu den Gestaltungsmerkmalen zu überprüfen. Bei einer Änderung des Etikettensitzes außerhalb einer vorgebbaren Toleranzgrenze vermittelt die Etikettensitzkontrolleinrichtung entsprechende Signale zur Ansteuerung einer Korrektureinrichtung, welche auf die Etikettleraggregate einwirkt, so dass ein korrekter Etikettensitz erreichbar ist. Natürlich werden die mit einen nicht korrekt ausgerichteten Etikett versehenen Flaschen in einer Ausschleusvorrichtung aussortiert, was selbstverständlich auch über das entsprechend generierte Signal der Etikettensitzkontrolleinrichtung möglich ist.

Die DE 44 41 245 A1 offenbart ein Verfahren zum Kontrollieren von etikettierten Gefäßen. Die Kontrollvorrichtung ist in einer Etikettiermaschine integriert, und weist einen Laser-Entfernungsmesser auf. Mit dem Laser-Entfernungsmesser kann festgestellt werden, ob ein Behälter mit einem Etikett versehen ist oder nicht. Während eines aktiven Messintervalls trifft der vom Laser-Entfernungsmesser ausgehende Laserstrahl zuerst auf die Oberfläche einer vorbeibewegten Flasche und misst deren Entfernung von seinem feststehenden Gehäuse, welches somit den konstanten Bezugsort bildet. Sobald der Laserstrahl auf die Oberfläche des Etiketts trifft, ergibt sich eine sprunghafte Verringerung der momentan gemessenen Entfernung entsprechend der Dicke des Etiketts und gegebenenfalls des Leimfilms zwischen der Flasche und dem Etikett. Diese sprunghafte Abstandsänderung in wird einer Auswerteeinheit erfasst, und als Kriterium für das Vorhandensein eines Etiketts gewertet. Dementsprechend sendet die Auswerteeinheit kein Signal oder ein Gut-Signal an eine Sortiervorrichtung aus, Ist kein Etikett auf der Flasche vorhanden, wird auch kein sprunghafter Entfernungssprung detektierbar, so dass die Auswerteeinheit ein Fehlersignal an die Sortiervorrichtung abgibt, welche die entsprechende Flasche aussortiert. Als Hauptnachteil ist dabei anzusehen, dass die Kontrolleinrichtung lediglich feststellen kann, ob ein Etikett an der Flasche vorhanden ist oder nicht. Nicht feststellbar ist dagegen, ob das Etikett auch korrekt beispielsweise zu Gestaltungsmerkmalen ausgerichtet ist, oder Falten aufweist.

Beispielsweise werden Flaschen oder ähnliche Behälter mittels einer Füllvorrichtung mit einem Füllgut befüllt, um dann einer Etikettiermaschine zugeführt zu werden. Die Behälter werden in der Etikettiermaschine oder vorher beispielsweise bezogen auf Gestaltungsmerkmale (so genannte Embossings) ausgerichtet, so dass die Etiketten ausgerichtet zu den Gestaltungsmerkmalen auf den Behälter aufgebracht werden können. Die etikettierten Behälter werden erneut ausgerichtet, und an einer Inspektionsvorrichtung, welche als Etikettensitzkontrolle ausgebildet sein kann, vorbeigeführt bzw. transportiert. Erkennt die Etikettensitzkontrolle Behälter mit einem schlechten oder fehlerhaften Etikettensitz, wird ein Signal zum Ausschleusen erzeugt. Die ausgeschleusten Behälter, zum Beispiel Flanschen werden auf einem gesonderten Transporteur gelagert. Derartige Vorrichtungen sind bspw. aus der DE 33 24 449 A1 und US 2005/0263443 A1 bekannt, gemäß dem Oberbegriff des Anspruchs 1.

Selbstverständlich bedarf die Inspektionseinrichtung, zum Beispiel in der Ausgestaltung als Etikettensitzkontrolle einer Überprüfung auf korrekte Funktion. Dies kann zum Beispiel mit einer Überprüfung der ausgeschleusten Behälter geschehen. Dieses Vorgehen ist aber sehr aufwändig und unsicher, da insbesondere die Behälter, welche nicht ausgeschleust wurden, nur stichprobenartig überprüft werden können, da der Behälterfluss eine große Geschwindigkeit aufweist. Etikettiermaschinen zum Beispiel haben einen Durchlauf von bis 60.000 Behälter bzw. Flaschen pro Stunde.

Der Erfindung liegt daher die Aufgabe zugrunde, ein Testverfahren zur Überprüfung einer Inspektionseinrichtung, mit welchem die vorgenannten Nachteile vermieden sind.

Erfindungsgemäß wird die Aufgabe durch ein Testverfahren mit den Merkmalen des Anspruchs 1 gelöst.

Mit der Erfindung kann die Inspektionseinrichtung zuverlässig auf deren korrekte Funktion hin überprüft werden. Die Inspektionseinrichtung sollte bei korrekter Funktion auch jeweils ein entsprechendes Signal zum Ausschleusen zumindest fehlerhafter Behälter an eine Aussortiervorrichtung übermitteln. Natürlich kann dabei eine Auswerteeinheit zwischengeschaltet sein. Erkennt die Inspektionseinrichtung alle fehlerhaften Behälter, bzw. werden alle fehlerhaften Prüfbehälter ausgeschleust, und belässt fehlerfreie Prüfbehälter in dem Behälterfluss, ist sichergestellt, dass die Inspektionseinrichtung korrekt funktioniert.

In Günstiger Ausgestaltung ist vorgesehen, dass die vorgegebene Anzahl von Prüfbehältern mit fehlerhaftem und/oder korrektem Etikettensitz in einen Transportweg vor die Inspektionseinrichtung eingeführt werden, wobei die Inspektionseinrichtung die Ausgestaltung einer Etikettensitzkontrolleinrichtung hat, und die Behälter an dieser vorbeigeführt werden, und die Etikettensitzkontrolle die Prüfbehälter inspiziert und einen Messwert generiert, mittels welchem die Anzahl der Prüfbehälter mit fehlerhaften und/oder korrektem Etikettensitz bestimmbar ist, wobei mittels des Messwertes die Abweichung zwischen dem Soll-Messwert und dem Ist-Messwert bestimmbar ist, wobei idealerweise der Soll-Messwert die vorgegebene Anzahl von Prüfbehältern, mit fehlerhaftem und/oder korrektem Etikettensitz ist und der Ist-Messwert, die von der Inspektionseinrichtung gemessene oder erfasste Anzahl der Prüfbehältern mit fehlerhaftem und/oder korrektem Etikettensitz ist.

Zweckmäßig im Sinne der Erfindung kann vorgesehen sein, wenn die Inspektionseinrichtung ein Signal zum Ausschleusen mindestens der Prüfbehälter mit fehlerhaftem oder korrektem und idealerweise für Prüfbehälter mit beiden Arten des Etikettensitzes generiert.

In zweckmäßiger Ausgestaltung ist die Inspektionseinrichtung einer Etikettiermaschine zugeordnet, wobei die Inspektionseinrichtung in bevorzugter Ausgestaltung als Etikettensitzkontrolle bekannter Art ausgeführt ist. In der Etikettiermaschine können Behälter unterschiedlichster Art, zum Beispiel Flaschen mit unterschiedlichen Etiketten, welche jeweils einen Hinweis auf unterschiedliche Füllgüter geben versehen werden. Die Etikettiermaschine kann zum Beispiel eine Erkennungsstation für Gestaltungsmerkmale (so genannte Embossings) und eine Ausrichtstation aufweisen, wobei beide Stationen natürlich auch in einer gemeinsamen Station integriert sein können.

Günstiger Weise kann vorgesehen sein, dass zunächst ein Etikett einer bestimmten Sorte in die Ausrichtstation eingelernt wird, so dass ein Ausrichtmerkmal als Prüfprogramm definiert wird. Hierbei ist es günstig, wenn das einzulernende Etikett korrekt zu möglichen Embossings ausgerichtet und fehlerfrei an dem Behälter angebracht ist. Zweckmäßiger Weise wird die Prüffunktion in der Ausrichtstation nach dem Einlernen der neuen Etikettensorte zumindest bezüglich der Embossingerkennung abgeschaltet.

Mit der so eingelernten Etikettensorte wird nun die individuell vorgegebene Anzahl fehlerhafter Behälter erzeugt. Dies bedeutet, dass Behälter, beispielsweise Flaschen mit Etiketten der eingelernten Sorte in unkorrekter Weise versehen werden. Beispielsweise können die Etiketten bezogen auf das mögliche Embossing schief angeordnet sein, oder beispielhaft Falten aufweisen. Ein Erzeugen der individuell vorgegebenen Anzahl fehlerhafter Behälter kann beispielsweise manuell erfolgen. Selbstverständlich kann bei jedem Testverfahren bzw. Prüfprogramm eine unterschiedliche Anzahl fehlerhafter Behälter erzeugt werden, was mit dem Begriff der individuellen Vorgabe der Anzahl im Sinne der Erfindung gemeint ist.

Die fehlerhaften Prüfbehälter werden in die Etikettiermaschine eingeführt, bzw. in den Transportweg der Flaschen eingehängt oder eingestellt und an der Ausrichtstation vorbei in die Etikettiermaschine eingefahren. Natürlich ist die Etikettiermaschine während des Testverfahrens bzw. während des Prüfprogramms zumindest bezüglich ihrer Etikettierfunktion ausgeschaltet.

Die fehlerhaften Prüfbehälter sollten bei korrekter Funktion der Inspektionseinrichtung bzw. der Etikettensitzkontrolleinrichtung von dieser erkannt werden, so dass in bekannter Weise ein Signal zum Ausschleusen der fehlerhaften Behälter generiert wird.

Zur weiteren Kontrolle der Inspektionseinrichtung bzw. der Etikettensitzkontrolle kann natürlich auch vorgesehen sein, zumindest einen mit einem korrekt aufgebrachten Etikett versehenen Behälter an der Inspektionseinrichtung vorbeizuführen, welcher dann bei korrekter Funktion der Inspektionseinrichtung bzw. der Etikettensitzkontrolle nicht ausgeschleust werden sollte, oder bevorzugt ausgeschleust wird, aber als in Ordnung gekennzeichnet wird. In bevorzugter Ausführung des Verfahrens kann vorgesehen sein, einen Gesamtprüfbehälterfluss zu erzeugen, welcher aus einer individuell vorgegebenen Anzahl fehlerhafter und nicht fehlerhafter Prüfbehälter gebildet ist, also dass ein Gesamtprüfbehälterfluss aus korrekt etikettierten und nicht korrekt etikettierten Prüfbehältern erzeugt wird. Dieser Gesamtprüfbehälterfluss wird in die Etikettiermaschine eingefahren und an der Inspektionseinrichtung bzw. an der Etikettensitzkontrolle vorbeigeführt. Bei korrekter Funktion der Inspektionseinrichtung bzw. der Etikettensitzkontrolle verbleiben dabei die jeweils fehlerfreien Prüfbehälter in dem Prüfbehälterfluss, wobei die fehlerhaften Prüfbehälter ausgeschleust werden. Natürlich können auch hier die fehlerfreien Prüfbehälter ausgeschleust werden, dann aber wiederum als korrekt gekennzeichnet werden.

Mit der Erfindung wird ein Testverfahren zur Kontrolle einer Inspektionseinrichtung bzw. in der bevorzugten Ausführung als Etikettensitzkontrolleinrichtung bereitgestellt mit welchem eine Überprüfung dieser auf korrekte Funktion regelmäßig zum Beispiel täglich, vor jedem Schichtwechsel bzw. vor einem Sortenwechsel durchführbar ist. Die Inspektionseinrichtung bzw. die Etikettensitzkontrolleinrichtung kann dabei in bevorzugter Ausführung mit einem Inspektionsbildschirm verbunden sein, so dass unmittelbar nach passieren der Behälter an der Inspektionseinrichtung bzw. an der Etikettensitzkontrolle vorbei das Ergebnis sichtbar ist, wobei gleichzeitig unmittelbar eine Aussage über eine korrekte Funktion der Inspektionseinrichtung bzw. der Etikettensitzkontrolle getroffen werden kann. In günstiger Ausführung kann vorgesehen sein, zumindest die Anzahl der fehlerhaften Behälter in der Inspektionseinrichtung abzulegen. Natürlich kann auch die Anzahl der Behälter des Gesamtbehälterflusses aufgeteilt nach "Gut-" und/oder "Schlecht-Behälter" in der Inspektionseinrichtung abgelegt werden.

Nach dem Durchlauf des Testverfahrens bzw. des zuvor beschriebenen Prüfprogramms wird die beispielhaft genannte Etikettiermaschine wieder auf ihre ursprüngliche Funktion zurückgestellt, was bedeutet, dass z.B. die Ausrichtstation und die Etikettierfunktion manuell wieder angeschaltet werden.

Bei dem bisher beschriebenen Testverfahren, wurde manuell vorgegangen, was bedeutet, dass die Funktionen der beispielhaften Etikettiermaschine manuell ausgeschaltet wurden. In einer Weiterbildung des erfindungsgemäßen Testverfahrens, kann vorgesehen sein, dieses automatisch durchzuführen.

Dabei ist bei der beispielhaften Etikettiermaschine zunächst wie zuvor vorgesehen, dass bevorzugt ein fehlerfreier Behälter in die Ausrichtstation eingelernt wird, so dass ein Ausrichtmerkmal als Prüfprogramm definiert wird.

Ein Testverfahren kann umfassend zumindest die Schritte : Erzeugen einer vorgegebenen Anzahl fehlerhaft etikettierter Prüfbehälter; Vorbeiführen der fehlerhaft etikettierten Prüfbehälter an der Inspektionseinrichtung, welche die fehlerhaft etikettierten detektiert und idealerweise ein Signal zum Ausschleusen der fehlerhaft etikettierten Prüfbehälter erzeugt, wobei bei dem Testverfahren mindestens die folgenden Schritte : Erzeugen von fehlerhaft und korrekt etikettierten Prüfbehältern; Vorbeiführen der Prüfbehälter an der Inspektionseinrichtung, welche die mindestens fehlerhaft oder korrekt etikettierten Prüfbehälter detektiert und idealerweise mindestens ein Signal zum Ausschleusen der fehlerhaft oder korrekt etikettierten Prüfbehälter erzeugt, durchgeführt werden.

Zum automatischen Durchführen des Verfahrens kann vorteilhaft zumindest ein Prüfbehälter erzeugt werden, welcher mit einem einmaligen, besonderen Merkmal, also zum Beispiel mit einem einmaligen Aufkleber und/oder einmaligen Gestaltungsmerkmal (Embossing) in den Behälterfluss eingebracht wird. Bevorzugter Weise wird wiederum manuell eine individuell vorgebbare Anzahl von Prüfbehältern bzw. von Prüfflaschen erzeugt. Diese Prüfbehälter werden in bevorzugter Ausführung mit fehlerhaft aufgebrachten (manuell) Etiketten der eingelernten Sorte versehen. Die Prüfbehälter werden in den Behälterfluss eingebracht und der beispielhaften Etikettiermaschine zugeleitet. Vorteilhaft erkennt die Ausrichtstation dabei die Prüfbehälter an dem einmaligen Merkmal und generiert ein Signal an die beispielhafte Etikettiermaschine bzw. an die Inspektionseinrichtung in der beispielhaften Ausführung als Etikettensitzkontrolleinrichtung, so dass ein Prüfprogramm detektierbar ist. Die Prüfbehälter werden in die beispielhafte Etikettiermaschine eingefahren, welche aufgrund des erzeugten Signals des Durchlaufens des Testverfahrens bzw. des Prüfprogramms ihre Etikettierfunktion automatisch ausschaltet. Auch die Funktion der Ausrichtstation wird zumindest bezüglich ihrer Embossingerkennung ausgeschaltet.

Die fehlerhaften Prüfbehälter sollten bei korrekter Funktion der Inspektionseinrichtung bzw. der Etikettensitzkontrolleinrichtung von dieser erkannt werden, so dass in bekannter Weise ein Signal zum Ausschleusen der fehlerhaften Prüfbehälter generiert wird.

Zur weiteren Kontrolle der Inspektionseinrichtung bzw. der Etikettensitzkontrolle kann natürlich auch vorgesehen sein, zumindest einen mit einem korrekt aufgebrachten Etikett versehenen Prüfbehälter an der Inspektionseinrichtung vorbeizuführen, welcher dann bei korrekter Funktion der Inspektionseinrichtung bzw. der Etikettensitzkontrolle nicht ausgeschleust werden sollte, oder bevorzugt ausgeschleust wird, aber als in Ordnung gekennzeichnet wird.

In bevorzugter Ausführung des Verfahrens kann vorgesehen sein, einen Gesamtprüfbehälterfluss zu erzeugen, welcher aus einer vorgegebenen Anzahl fehlerhafter und nicht fehlerhafter Prüfbehälter gebildet ist, also dass ein Gesamtprüfbehälterfluss aus korrekt etikettierten und nicht korrekt etikettierten Behältern erzeugt wird. Dieser Gesamtprüfbehälterfluss wird in die Etikettiermaschine eingefahren und an der Inspektionseinrichtung bzw. an der Etikettensitzkontrolleinrichtung vorbeigeführt. Bei korrekter Funktion der Inspektionseinrichtung bzw. der Etikettensitzkontrolleinrichtung verbleiben dabei die jeweils fehlerfreien Prüfbehälter in dem Prüfbehälterfluss, wobei die fehlerhaften Prüfbehälter ausgeschleust werden. Natürlich können auch hier die fehlerfreien Prüfbehälter ausgeschleust werden, dann aber wiederum als korrekt gekennzeichnet werden.

Auch mit dieser Ausgestaltung wird ein Testverfahren zur Kontrolle einer Inspektionseinrichtung bzw. in der bevorzugten Ausführung als Etikettensitzkontrolleinrichtung bereitgestellt mit welchem eine Überprüfung dieser auf korrekte Funktion regelmäßig zum Beispiel täglich, vor jedem Schichtwechsel bzw. vor einem Sortenwechsel durchführbar ist. Die Inspektionseinrichtung bzw. die Etikettensitzkontrolleinrichtung kann dabei in bevorzugter Ausführung mit einem Inspektionsbildschirm verbunden sein, so dass unmittelbar nach passieren der Prüfbehälter an der Inspektionseinrichtung bzw. an der Etikettensitzkontrolle vorbei das Ergebnis sichtbar ist, wobei gleichzeitig unmittelbar eine Aussage über eine korrekte Funktion der Inspektionseinrichtung bzw. der Etikettensitzkontrolle getroffen werden kann. In günstiger Ausführung kann vorgesehen sein, zumindest die Anzahl der fehlerhaften Prüfbehälter in der Inspektionseinrichtung abzulegen. Natürlich kann auch die Anzahl der Prüfbehälter des Gesamtprüfbehälterflusses aufgeteilt nach "Gut-" und/oder "Schlecht-Prüfbehälter" in der Inspektionseinrichtung abgelegt werden.

Nach dem Durchlauf des Testverfahrens bzw. des zuvor beschriebenen Prüfprogramms wird die beispielhaft genannte Etikettiermaschine wieder auf ihre ursprüngliche Funktion zurückgestellt, was bedeutet, dass z.B. die Ausrichtstation und die Etikettierfunktion wieder angeschaltet werden. Auch dies kann vorteilhaft automatisch erfolgen, wenn die Inspektionseinrichtung bzw. die Etikettensitzkontrolleinrichtung im Abgleich mit der abgelegten Anzahl der Prüfbehälter (fehlerhafter und/oder Gesamtprüfbehälter) detektiert, dass alle Prüfbehälter durchgelaufen sind, und das Testverfahren beendet ist.

In einer weiteren Ausgestaltung des Testverfahrens kann vorgesehen sein, dass die Prüfbehälter über ein Schleusen- bzw. Speichersystem regelmäßig und/oder bei speziellen Situationen (z.B. täglich, Schichtwechsel, Sortenwechsel) automatisch in den Behälterfluss beispielsweise zu etikettierender Behälter bzw. Flaschen eingeleitet und aus diesem wieder ausgeleitet werden, um die Inspektionseinrichtung bzw. die Etikettensitzkontrolle auf korrekte Funktion zu überprüfen. Hierbei können die Prüfbehälter sortiert eingesammelt und beispielsweise in einer Sammelbox aufbewahrt werden, welche eine Bedienperson an die Einlaufstelle der beispielhaften Etikettiermaschine verbringt. Natürlich kann die Sammelbox auch maschinell an die Einlaufstelle verbracht werden. Denkbar ist natürlich auch ein automatischer Transport der in dem Speichersystem gesammelten Prüfbehälter zur Einlaufstelle.

Die Erfindung eignet sich in Anwendung für Etikettiermaschinen bzw. für deren Etikettensitzkontrolleinrichtung. Insofern ist das erfindungsgemäße Testverfahren an Etikettiermaschinen für die Prüfung der Inlabeler Etikettensitz- und Embossingallignement-Kontrolle durchführbar, so dass ein Betreiber der Etikettiermaschine stets eine Kontrolle durchführen kann, ob diese korrekt funktionieren, oder ob beispielsweise Wartungsarbeiten und/oder Einstellmaßnahmen erforderlich sind.

## Patentansprüche

1. Testverfahren zur Überprüfung einer Inspektionseinrichtung umfassend zumindest die Schritte:
- Erzeugen einer vorgegebenen Anzahl von Behältern, so genannten Prüfbehältern,
- Vorbeiführen der Prüfbehälter an der Inspektionseinrichtung, welche die Prüfbehälter detektiert und idealerweise ein Steuersignal erzeugt,
- wobei mindestens ein Prüfbehälter eine spezielle Prüfmarklerung, In Form eines Prüfembossings, eines Prüfetiketts, eines Prüfaufdrucks oder dergleichen aufweist, **dadurch gekennzeichnet dass** die Prüfmarkierung einer Erfassungseinheit eingelernt wird und mindestens den Beginn eines Prüfprogramms definiert, und
- der mindestens eine Prüfbehälter stromaufwärts einer Etikettiermaschine in den Transportweg aufgegeben wird, wobei dieser Prüfbehälter durch geeignete inspektions- oder Messsysteme als solcher erfasst wird, und gemäß der Inspektions- oder Messsysteme eine nachfolgende Etikettiervorrichtung oder Behandlungsstation einer Etikettiervorrichtung derart gesteuert wird, dass eine Etikettierfunktion in Bezug auf den mindestens einen Prüfbehälter abgeschaltet wird.

2. Testverfahren nach Anspruch 1, **dadurch gekennzeichnet, dass** die Inspektionseinrichtung als Etikettensitzkontrolleinrichtung ausgeführt und einer Etikettiermaschine zugeordnet ist.

3. Testverfahren nach einem der vorhergehenden Ansprüche, **dadurch gekennzeichnet, dass** die vorgegebene Anzahl von Prüfbehältern mit fehlerhaftem und/oder korrektem Etikettensitz in einen Transportweg vor die Inspektionseinrichtung eingeführt werden, wobei die Inspektionseinrichtung die Ausgestaltung einer Etikettensitzkontrolleinrichtung hat, und die Behälter an dieser vorbeigeführt werden, und die Etikettensitzkontrolle die Prüfbehälter inspiziert und einen Messwert generiert, mittels welchem die Anzahl der Prüfbehälter mit fehlerhaften und/oder korrektem Etikettensitz bestimmbar ist.

4. Testverfahren nach Anspruch 3, **dadurch gekennzeichnet, dass** mittels des Messwertes die Abweichung zwischen dem Soll-Messwert und dem Ist-Messwert bestimmbar ist, wobei idealerweise der Soll-Messwert die vorgegebene Anzahl von Prüfbehältern, mit fehlerhaftem und/oder korrektem Etikettensitz ist und der Ist-Messwert, die von der Inspektionseinrichtung gemessene oder erfasste Anzahl der Prüfbehältern mit fehlerhaftem und/oder korrektem Etikettensitz ist.

5. Testverfahren nach einem der vorhergehenden Ansprüche, **dadurch gekennzeichnet, dass** die Inspektionseinrichtung ein Signal zum Ausschleusen mindestens der Prüfbehälter mit fehlerhaftem oder korrektem und idealerweise für Prüfbehälter mit beiden Arten des Etikettensitzes generiert.

6. Testverfahren nach einem der vorhergehenden Ansprüche, **dadurch gekennzeichnet, dass** die vorgegebene Anzahl von Prüfbehältern in eine Etikettiermaschine eingefahren werden, und an der Inspektionseinrichtung in Form einer Etikettensitzkontrolle vorbeigeführt werden, welche ein Signal zum Ausschleusen von jeweils fehlerhaften Prüfbehältern generiert.

7. Testverfahren nach einem der vorhergehenden Ansprüche, **dadurch gekennzeichnet, dass** zumindest ein Prüfbehälter mit einem fehlerfrei angeordneten Etikett an der Inspektionseinrichtung in der Ausgestaltung als Etikettensitzkontrolleinrichtung vorbeigeführt wird, welcher in dem Behälterfluss verbleibt.

8. Testverfahren nach einem der vorhergehenden Ansprüche, **dadurch gekennzeichnet, dass** ein Gesamtprüfbehälterfluss erzeugt wird, welcher eine vorgegebene Anzahl fehlerhafter und fehlerfreier Prüfbehälter aufweiset, wobei der Gesamtprüfbehälterfluss an der Inspektionseinrichtung in der Ausgestaltung als Etikettensitzkontrolleinrichtung vorbeigeführt wird, wobei diese ein Signal zum Ausschleusen der fehlerhaften Prüfbehälter erzeugt, wobei die fehlerfreien Prüfbehälter in dem Prüfbehälterfluss verbleiben.

## Claims

1. Test method for checking an inspection device, comprising at least the steps of:
- generating a prescribed number of containers, so-called test containers,
- moving the test containers past the inspection device, which detects the test containers and ideally generates a control signal,
- wherein at least one test container has a special test mark in the form of a test embossing, of a test label, of a test imprint or the like, **characterised in that** the test mark of a capturing unit is taught-in and defines at least the beginning of a test program, and
- the at least one test container is placed in the transport path upstream of a labelling machine, wherein this test container is captured as such by suitable inspection systems or measuring systems and, according to the inspection systems or measuring systems, a subsequent labelling device or treatment station of a labelling device is controlled such that a labelling function in respect of the at least one **test container** is switched off.

2. Test method according to claim 1, **characterised in that** the inspection device is designed as label seating inspection device and allocated to a labelling machine.

3. Test method according to any one of the preceding claims, **characterised in that** the prescribed number of test containers with faulty and/or correct label seating are introduced into a transport path before the inspection device, wherein the inspection device has the design of a label seating inspection device, and the containers are moved past said label seating inspection device, and the label seating inspection inspects the test containers and generates a measurement value by means of which the number of test containers with faulty and/or correct label seating can be determined.

4. Test method according to claim 3, **characterised in that**, by means of the measurement value, the deviation between the nominal measurement value and the actual measurement value can be determined, wherein, ideally, the nominal measurement value is the prescribed number of test containers with faulty and/or correct label seating and the actual measurement value is the number, measured or captured by the inspection device, of test containers with faulty and/or correct label seating.

5. Test method according to any one of the preceding claims, **characterised in that** the inspection device generates a signal for rejecting at least the test containers with faulty or correct label seating and ideally for test containers with both types of label seating.

6. Test method according to any one of the preceding claims, **characterised in that** the prescribed number of test containers are taken into a labelling machine, and are moved past the inspection device in the form of a label seating inspection device, which generates a signal for rejecting the respective faulty test containers.

7. Test method according to any one of the preceding claims, **characterised in that** at least one test container with a faultlessly arranged label is moved past the inspection device in the design as a label seating inspection device, said test container remaining in the container flow.

8. Test method according to any one of the preceding claims, **characterised in that** an overall test container flow is generated which has a prescribed number of faulty and faultless test containers, wherein the overall test container flow is moved past the inspection device in the design as a label seating inspection device, wherein it generates a signal for rejecting the faulty test containers, wherein the faultless test containers remain in the test container flow.

## Revendications

1. Procédé de test servant à vérifier un dispositif d'inspection, comprenant au moins les étapes suivantes consistant à :
- produire un nombre prédéfini de récipients, qu'on appelle les récipients de contrôle ;
- amener les récipients de contrôle à passer devant le dispositif d'inspection, lequel détecte les récipients de contrôle et produit idéalement un signal de commande ;
- sachant qu'au moins un récipient de contrôle présente une marque de contrôle spécifique, sous la forme d'un estampage de contrôle, d'une étiquette de contrôle, d'une impression de contrôle ou similaire, **caractérisé en ce que** la marque de contrôle d'une unité de détection est programmée, et définit au moins le début d'un programme de contrôle, et
- **en ce que** le récipient de contrôle au moins au nombre de un est ajouté sur le trajet de transport en aval d'une étiqueteuse, sachant que ledit récipient de contrôle est détecté en tant que tel par des systèmes d'inspection ou de mesure appropriés, et **en ce qu'**un dispositif d'étiquetage ou une station de traitement d'un dispositif d'étiquetage qui suit sont commandés selon les systèmes d'inspection ou de mesure de telle manière qu'une fonction d'étiquetage est désactivée eu égard au récipient de contrôle au moins au nombre de un.

2. Procédé de test selon la revendication 1, **caractérisé en ce que** le dispositif d'inspection est réalisé sous la forme d'un dispositif de contrôle de position d'étiquettes et est associé à une étiqueteuse.

3. Procédé de test selon l'une quelconque des revendications précédentes, **caractérisé en ce que** le nombre prédéfini de récipients de contrôle présentant une position d'étiquettes défectueuse et/ou en bonne et due forme est introduit dans un trajet de transport en amont du dispositif d'inspection, sachant que le dispositif d'inspection présente la configuration d'un dispositif de contrôle de position d'étiquettes, et **en ce que** les récipients sont amenés à passer devant ledit dispositif de contrôle de position d'étiquettes, et **en ce que** le système de contrôle de position d'étiquettes inspecte les récipients de contrôle et génère une valeur de mesure permettant de déterminer le nombre des récipients de contrôle présentant une position d'étiquettes défectueuse et/ou en bonne et due forme.

4. Procédé de test selon la revendication 3, **caractérisé en ce que** l'écart entre la valeur de mesure de consigne et la valeur de mesure réelle peut être déterminé au moyen de la valeur de mesure, sachant qu'idéalement la valeur de mesure de consigne est le nombre prédéfini de récipients de contrôle présentant une position d'étiquettes défectueuse et/ou en bonne et due forme et que la valeur de mesure réelle est le nombre mesuré ou détecté par le dispositif d'inspection de récipients de contrôle présentant une position d'étiquettes défectueuse et/ou en bonne et due forme.

5. Procédé de test selon l'une quelconque des revendications précédentes, **caractérisé en ce que** le dispositif d'inspection génère un signal servant à évacuer au moins les récipients de contrôle présentant une position d'étiquettes défectueuse ou en bonne et due forme et, idéalement, pour des récipients de contrôle présentant les deux types de position d'étiquettes.

6. Procédé de test selon l'une quelconque des revendications précédentes, **caractérisé en ce que** le nombre prédéfini de récipients de contrôle entrent dans une étiqueteuse et sont amenés à passer devant le dispositif d'inspection se présentant sous la forme d'un système de contrôle de position d'étiquettes, lequel génère un signal servant à évacuer des récipients de contrôle respectivement défectueux.

7. Procédé de test selon l'une quelconque des revendications précédentes, **caractérisé en ce qu'**au moins un récipient de contrôle présentant une étiquette dont la disposition n'est pas défectueuse est amené à passer devant le dispositif d'inspection configuré sous la forme d'un dispositif de contrôle de position d'étiquettes, ledit récipient de contrôle restant dans le flux de récipients.

8. Procédé de test selon l'une quelconque des revendications précédentes, **caractérisé en ce qu'**un flux global de récipients de contrôle est généré, lequel présente un nombre prédéfini de récipients de contrôle défectueux et dépourvus d'anomalies, sachant que le flux global de récipients de contrôle est amené à passer devant le dispositif d'inspection configuré sous la forme d'un dispositif de contrôle de position d'étiquettes, sachant que ce dernier génère un signal servant à évacuer les récipients de contrôle défectueux, sachant que les récipients de contrôle dépourvus d'anomalies restent dans le flux des récipients de contrôle.
